**Europäisches Patentamt**

**European Patent Office**

**Office européen des brevets**

(19)

(11) **EP 1 211 788 A1**

(12) **EUROPÄISCHE PATENTANMELDUNG**

(43) Veröffentlichungstag:
**05.06.2002 Patentblatt 2002/23**

(51) Int Cl.[7]: **H02M 1/12**

(21) Anmeldenummer: **01127330.7**

(22) Anmeldetag: **16.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **29.11.2000 DE 10059332**

(71) Anmelder: **SIEMENS AKTIENGESELLSCHAFT**
**80333 München (DE)**

(72) Erfinder:
• **Raith, Sebastian**
**91056 Erlangen (DE)**
• **Segger, Bernd**
**91052 Erlangen (DE)**

(54) **Bedämpfung von Resonanzüberhöhungen bei einem an einem Umrichter mit Spannungszwischenkreis betriebenen elektrischen Motor**

(57)    Bei einem Umrichtersystem mit Spannungszwischenkreis, das mit einer Netzeingangsdrossel im Hochsetzstellerbetrieb arbeitet oder andere eingangsseitige Induktivitäten aufweist, besteht die Gefahr, dass sich im Verband mit Motoren über Ableitkapazitäten Systemeigenschwingungen ausbilden. Wenn nun der Motor einen Amplituden-Frequenzgang mit einer ausgeprägten Resonanzfrequenz im Bereich solcher Systemeigenschwingungen aufweist, so besteht die Gefahr, dass am Motorsternpunkt (S) höhere Spannungen auftreten als an den Motorphasen (U, V, W). Durch Eintransformierung einer Impedanz ($\underline{Z}$), insbesondere am Eingang des Motors, zur Bedämpfung von durch an den Motorphasen (U, V, W) asymmetrisch gegen Erde anregende Systemschwingungen ($f_{sys}$) des Umrichtersystems ($L_K$, UR, LT, M) in den Wicklungssträngen hervorgerufenen kapazitiven Ableitströmen gegen Erdpotential wird dem durch die vorliegende Erfindung vorgebeugt.

## FIG 20

**EP 1 211 788 A1**

**Beschreibung**

Die Erfindung betrifft ein Verfahren zur Bedämpfung von Resonanzüberhöhungen an einem Motorsternpunkt bei einem an einem Spannungszwischenkreis-Umrichter mit eingangsseitiger Induktivität, insbesondere einer Netzeingangsdrossel, betriebenen elektrischen Motor, der aufgrund von Eigenschaften seiner Wicklungsstränge einen Frequenzgang mit mindestens einer Resonanzfrequenz gegen Erdpotential aufweist, sowie einen entsprechenden elektrischen Motor mit einer solchen Bedämpfung von Resonanzüberhöhungen.

In heutigen Umrichtersystemen mit Spannungszwischenkreis, insbesondere in mehrachsigen solchen Umrichtersystemen, können sich Systemschwingungen ausbilden, die praktisch nicht bedämpft werden. Dies betrifft im wesentlichen Umrichter mit Spannungszwischenkreis und einer geregelten Einspeisung in Form eines geregelten netzseitigen Stromrichters, auch als Eingangsstromrichter bezeichnet.

Umrichter dienen prinzipiell zum Betrieb von elektrischen Maschinen mit variabler Speisefrequenz. Ein solcher Zwischenkreis-Frequenzumrichter ermöglicht es, einen elektrischen Motor, z.B. eine Drehfeldmaschine wie etwa die Synchronmaschine, nicht mehr nur direkt am Netz und damit an eine starre Drehzahl gebunden zu betreiben, sondern es kann das starre Netz durch ein elektronisch erzeugtes frequenzvariables und auch amplitudenvariables Netz zur Speisung der elektrischen Maschine ersetzt werden.

Eine Entkopplung der beiden Netze, zum einen dem versorgenden Netz mit fester Amplitude und Frequenz und zum anderen dem die elektrische Maschine speisenden Netz mit variabler Amplitude und Frequenz, erfolgt über einen Gleichspannungsspeicher oder einen Gleichstromspeicher in Form des sogenannten Zwischenkreises. Solche Zwischenkreis-Umrichter weisen dabei im wesentlichen drei zentrale Baugruppen auf:

- einen netzseitigen Eingangsstromrichter, der ungesteuert (z.B. Diodenbrücken) oder gesteuert ausgeführt sein kann, wobei eine Energierückspeisung in des Netz nur mit einem gesteuerten Eingangsstromrichter möglich ist;
- einen Energiespeicher im Zwischenkreis in Form eines Kondensators bei einem Spannungszwischenkreis und einer Drossel bei einem Stromzwischenkreis;
- einen ausgangsseitigen Maschinenstromrichter bzw. Wechselrichter zur Speisung der Maschine, der in der Regel über eine Drehstrom-Brückenschaltung mit sechs löschbaren Stromventilen, z.B. IGBT-Transistoren, die Gleichspannung eines Spannungszwischenkreises in ein Drehspannungssystem umsetzt.

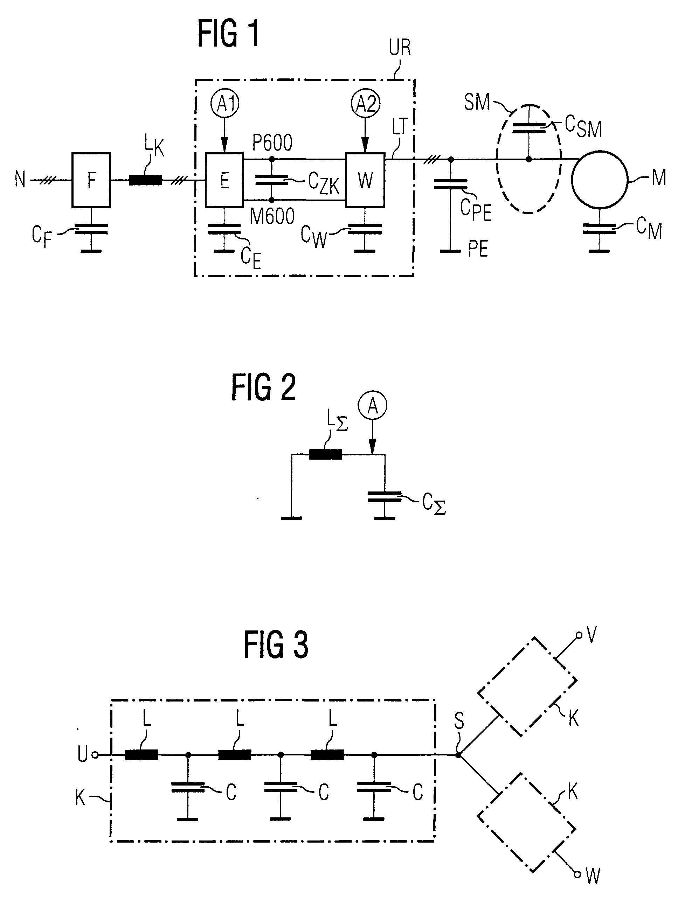

Ein solches Umrichtersystem mit Spannungszwischenkreis, das u.a. aufgrund eines sehr hohen Frequenz- und Amplitudenstellbereichs bevorzugt bei Haupt- und Servoantrieben in Werkzeugmaschinen, Robotern und Produktionsmaschinen zum Einsatz gelangt, ist in der Darstellung nach FIG 1 in Form einer Prinzipskizze gezeigt.

Der Umrichter UR ist über einen Filter F und eine Speicherdrossel mit der Induktivität $L_K$ an ein Drehstromnetz N angeschlossen. Der Umrichter UR weist die beschriebene Einspeisung E, einen Spannungszwischenkreis mit der Speicherkapazität $C_{ZK}$ und einen Ausgangswechselrichter W auf. Gezeigt ist eine geregelte Einspeisung E, die durch schaltende Bauelemente (z.B. eine Drehstrombrückenschaltung aus IGBT-Transistoren) geregelt betrieben wird, wodurch die Anordnung nach FIG 1 eine Anregung A1 erfährt. Der Wechselrichter W wird ebenfalls über weitere schaltende Bauelemente geregelt, z.B. wiederum mittels einer Drehstrombrückenschaltung mit sechs IGBT-Transistoren. Die Tatsache, dass auch im Wechselrichter Schalthandlungen stattfinden, stellt ebenfalls eine Anregung A2 des Systems dar. Der Kondensator $C_{ZK}$ im Spannungszwischenkreis ist zwischen die positive Zwischenkreisschiene P600 und die negative Zwischenkreisschiene M600 geschaltet. Der Wechselrichter ist ausgangsseitig über eine Leitung LT mit Schutzleiter PE und Schirmung SM mit einem Motor M in Form einer Drehstrommaschine verbunden.

Das festfrequente Drehstromnetz N speist nun über den Filter F und die Speicherdrossel $L_K$ mittels der geregelten Einspeisung den Zwischenkreiskondensator $C_{ZK}$ über den Eingangsstromrichter E, wobei der Eingangsstromrichter E (z.B. ein Pulsumrichter) mit der Speicherdrossel $L_K$ als Hochsetzsteller arbeitet. Nach dem Bestromen der Speicherdrossel $L_K$ wird diese mit dem Zwischenkreis verbunden und treibt den Strom entgegen der größeren Spannung in den Kondensator $C_{ZK}$. Dadurch kann die Zwischenkreisspannung auch über dem Scheitelwert der Netzspannung liegen.

Diese Kombination stellt somit quasi eine Gleichspannungsquelle dar. Aus dieser Gleichspannung formt der Wechselrichter W in der beschriebenen Weise wieder ein Drehspannungssystem, wobei die Ausgangsspannung im Gegensatz zur sinusförmigen Spannung eines Drehstromgenerators aufgrund der elektronischen Erzeugung über eine Brückenschaltung nicht den Verlauf einer idealen Sinusschwingung, sondern neben der Grundschwingung auch Oberwellen aufweist.

Neben den beschriebenen Elementen einer solchen Anordnung muss jedoch auch berücksichtigt werden, dass parasitäre Kapazitäten auftreten, die die Entstehung von Systemschwingungen in einem solchen Umrichtersystem begünstigen. So weisen neben dem Filter F mit einer Ableitkapazität $C_F$ auch der Eingangsstromrichter E, der Wechselrichter W und der Motor M Ableitkapazitäten $C_E$, $C_W$ und $C_M$ gegen Erde auf. Daneben treten zusätzlich eine Kapazität $C_{PE}$ der Leitung LT gegen den Schutzleiter PE und eine Kapazität $C_{SM}$ der Leitung LT gegen die geerdete Schirmung SM auf.

Die Erfinder haben nun erkannt, dass sich eine besonders ausgeprägte Anregung dieser Systemschwingungen in der Einspeisung E befindet. Je nach dem gewählten Regelungsverfahren zur Einspeisung werden dabei 2 oder 3 Phasen des Netzes N kurzgeschlossen, um die Speicherdrossel $L_K$ zu bestromen. Werden alle drei Phasen U, V, W kurzgeschlossen, so liegt entweder die positive P600 oder die negative Zwischenkreisschiene M600 hart am Sternpunkt des versorgenden Netzes (i.d.R. nahe Erdpotenzial je nach Nullsystemanteil). Werden 2 Phasen des Netzes N kurzgeschlossen, so liegen die betreffenden Zwischenkreisschienen P600 und M600 hart auf einem induktiven Spannungsteiler der 2 Netzphasen.

Je nach Situation der Netzspannungen ist diese Spannung in der Nähe des Erdpotenzials (ca. 50-60V). Wegen der in der Regel großen Zwischenkreiskapazität $C_{ZK}$ (stetiger Spannungsverlauf) liegt die andere Zwischenkreisschiene 600V tiefer bzw. höher und kann damit auch die verbleibende Phase des Netzes verreißen. In beiden Fällen wird der Zwischenkreis besonders stark aus seiner "natürlichen", symmetrischen Ruhelage (+/-300V gegen Erde) ausgelenkt, was eine besonders starke Anregung der Systemschwingung darstellt.

Im Hinblick auf die Entstehung von unerwünschten Systemschwingungen erlaubt der für den Anwendungsbereich relevante Frequenzbereich unterhalb von 50 bis 100 kHz die Berechnung einer Resonanzfrequenz mit konzentrierten Elementen. Dabei sind die Ableitkapazitäten $C_F$ gegen Erde im Filter F in der Regel so groß, dass diese nicht frequenzbestimmend wirken. Dabei kann man davon ausgehen, dass eine dominante Anregung zu Schwingungen vor den geschilderten Kapazitäten erfolgt und die Filterableitkapazität $C_F$ außer Betracht bleiben kann.

Die Resonanzfrequenz $f_{res}$(sys) dieses Sy-stems, die im folgenden mit $f_{sys}$ bezeichnet wird, ergibt sich somit zu:

$$f_{sys} = \frac{1}{2\pi\sqrt{L_\Sigma \cdot C_\Sigma}} \qquad (1)$$

mit

$$L_\Sigma = L_K + L_F \qquad (2)$$

wobei $L_K$ den dominanten Anteil darstellt und $L_F$ die um-richterseitig wirksamen asymmetrischen induktiven Ele-mente im Filter (z.B. stromkompensierte Drosseln) sind, und

$$C_\Sigma = C_E + C_W + C_{PE} + C_{SM} + C_M \qquad (3)$$

Dieser Zusammenhang ist in der Darstellung nach FIG 2 schematisch gezeigt. Dabei bilden $L_\Sigma$ und $C_\Sigma$ einen passiven Kreis, der durch eine Anregung A angeregt wird und sich auf seine natürliche Resonanzfrequenz $f_{sys}$ einschwingt.

Als Folge bekommen die Potenziale der Zwischenkreisschienen P600 und M600 zusätzlich zu den betriebsbedingten Verschiebungen mit beispielsweise 600V Amplitude eine zusätzliche unerwünschte Schwingung mit einer Amplitude von bis zu mehreren hundert Volt aufmoduliert.

Bei elektrischen Motoren M allgemein, vor allem aber wenn sie in Polspultechnik ausgeführt sind (z. B. Torquemotoren), kann ein Frequenzgang mit ausgeprägten Resonanzüberhöhungen gegen Erdpotential auftreten, wenn sie an allen Motorklemmen gleichtaktig gegen Erde angeregt werden, z.B. durch die vorange-hend dargestellten unerwünschten Systemschwingun-gen.

Erklärbar sind diese Resonanzstellen durch ein asymmetrisches Ersatzschaltbild einer Kettenleiterschaltung K parasitärer Elemente (Induktivitäten L und Ableitkapazitäten C) in der Motorwicklung, wie sie in FIG 3 schematisch skizziert ist. Dabei ist beispielhaft der Wicklungsstrang einer Phase U eines Drehstrommotors M mit den drei Phasen U, V, W gezeigt, deren Wick-lungssträngen im Motorsternpunkt S elektrisch miteinander verbunden sind. Die Eingangsspannungen des vom Wechselrichter W generierten dreiphasigen Drehstroms liegen an den dem Sternpunkt S gegenüberliegenden Außenklemmen der jeweiligen Wicklungsstränge an.

Dies trifft insbesondere bei Motoren in Polspultechnik zu, bei denen einzelne Kettenvierpole des Kettenleiters K aufgrund des Aufbaus makroskopisch plausibel sind und im wesentlichen einer einzelnen Polspule entsprechen. Bei der Polspultechnik weisen die aus Elektroblechen bestehenden Magnetkerne Zähne auf, die als Polkerne dienen, auf die vorgefertigte Spulen aufgesetzt und entsprechend verschaltet werden. Die einzelnen Induktivitäten L sind, wie aus FIG 3 ersichtlich, elektrisch in Reihe geschaltet, wobei jede Polspule eine kapazitive Kopplung zum Polkern (Elektroblech) besitzt, auf dem die Spule aufgebracht ist. Diese jeweiligen Kapazitäten sind als Ableitkapazitäten C gegenüber Masse dargestellt, die vom magnetischen Kern gebildet wird.

Jedoch lässt sich das geschilderte Phänomen auch bei Motoren anderer Bauweise (z.B. in sogenannter wilder Wicklung) mit einem Modell eines Kettenleiters K erklären, indem dieser eine Ersatzschaltung mit identischen Vierpolen in Form von LC-Schwingkreisen darstellt, deren Elemente den Frequenzgang nachbilden.

Die Überhöhung tritt dabei im Bereich des Sternpunktes S auf, der normalerweise nicht gezielt auf Spannungsbelastungen ertüchtigt wird. Wenn die Systemschwingung des Umrichtersystems in der Nähe einer Motoreigenfrequenz liegt, dann kann das Isolationssystem gegen Erde, insbesondere am Sternpunkt S, überlastet werden und einen frühzeitigen Ausfall des Motors M zur Folge haben, da am Motorsternpunkt resonanzbedingt wesentlich höhere Spannungen als an den Motorklemmen auftreten können.

Diese Aussage gilt im Prinzip für alle Spannungsniveaus (Nieder-, Mittel- und Hochspannungssysteme), vor allem aber, wenn zum einen auf der Umrichterseite UR nach dem Hochsetzstellerprinzip (mit Speicherdrossel $L_K$) gearbeitet wird, und auf der anderen Seite im Motor M ein Frequenzgang mit ausgeprägten Resonanzüberhöhungen gegen Erdpotential auftritt, z. B. bei Motoren mit besonders niedriger Motoreigenfrequenz, weil hier die Eigendämpfung im Motor durch Wirbelstromverluste, Ummagnetisierungsverluste etc. besonders niedrig ist.

Zu ähnlichen Problemen kommt es auf dem Gebiet der elektrischen Maschinen immer wieder, wenn transiente Überspannungen auftreten. Daher werden die Überspannungen zur Vermeidung von Durchschlägen begrenzt. Beispielsweise wird gemäß der DE-A-38 26 282 ein spannungsabhängiger Metalloxid Widerstand einer Spule zur Überspannungsbegrenzung parallel geschaltet. In der DE-B-28 34 378 werden zur Querfelddämpfung Wicklungsabschnitte kurzgeschlossen. In ähnlicher Weise werden laut DE-A-24 33 618 bei einer Synchronmaschine transiente Überspannungen durch Querfelddämpferstäbe gedämpft.

Darüber hinaus wird in der EP-A-O 117 764 beschrieben, wie Überspannungen, die aufgrund von Resonanzphänomenen auftreten, durch ferroelektrische Isolatoren zwischen den Spulenwicklungen unterdrückt werden können. Schließlich wird in der EP-B-O 681 361 das Problem höherer harmonischer Schwingungen angesprochen, das bei Umrichtern und Gleichrichtern mit Leistungsthyristoren auftreten kann. Die Dämpferwicklung wird demzufolge mit Kondensatoren zu Resonanzkreisen verschaltet. Die Resonanzkreise besitzen eine Resonanzfrequenz, die 6n mal so hoch wie die Grundfrequenz der Synchronmaschine ist. Damit lassen sich höhere harmonische Schwingungen einer Grundwelle absorbieren.

Das Problem von möglichen Resonanzüberhöhungen im Sternpunkt S eines Motors M bleibt jedoch bestehen.

Aufgabe der vorliegenden Erfindung ist es daher, durch solche Systemschwingungen angeregte Resonanzüberhöhungen in einem an einem solchen Umrichtersystem betriebenen elektrischen Motor wirksam zu vermeiden.

Gemäß der vorliegenden Erfindung wird diese Aufgabe durch ein Verfahren zur Bedämpfung von Resonanzüberhöhungen an einem Motorsternpunkt bei einem an einem Spannungszwischenkreis-Umrichter mit eingangsseitiger Induktivität, insbesondere einer Netzeingangsdrossel, betriebenen elektrischen Motor gelöst, der aufgrund von Eigenschaften seiner Wicklungsstränge einen Frequenzgang mit mindestens einer Resonanzfrequenz gegen Erdpotential aufweist, indem in alle zu einem Motorsternpunkt führenden Motorphasen eine Impedanz zur Bedämpfung von in den Wicklungssträngen hervorgerufenen kapazitiven Ableitströmen gegen Erdpotential eintransformiert wird. Diese Impedanz wird dazu auf durch an den Motorphasen asymmetrisch gegen Erde anregende Systemschwingungen des Umrichtersystems hervorgerufene kapazitive Ableitströme ausgelegt.

Auch hat es sich als günstig erwiesen, wenn alle zu einem Motorsternpunkt führenden Motorphasen durch einen verlustbehafteten magnetisierbaren Koppelkern geführt werden. Dabei können die für die Dämpfung notwendigen Verluste vorteilhaft durch die Eigenschaften des magnetischen Materials selbst erzeugt werden.

Alternativ lässt sich dies erreichen, wenn der Koppelkern, z.B. ein Magnetkern, eine Wicklung aufweist, die über eine Impedanz kurzgeschlossen ist. Dabei hat es sich als günstig erwiesen, insbesondere im Hinblick auf eine mögliche Nachrüstung von Motoren, wenn alle zu einem Motorsternpunkt führenden Motorphasen am Eingang des Motors durch den verlustbehafteten Magnetkern geführt werden.

Wenn die Impedanz einen ohmschen Widerstand umfasst, dann ergibt sich eine besonders einfache und kostengünstige Realisierung.

Aufgrund der Erkenntnis, dass jeder Wicklungsstrang des Motors einen LC-Kettenleiter bildet, wird der ohmsche Widerstand vorzugsweise nach

$$R_a \geq \frac{1}{2} \cdot \frac{1}{3} \cdot \sqrt{\frac{L}{C}}$$

bemessen, wobei L die Induktivität und C die Ableitkapazität eines Kettenleiterglieds der LC-Kettenleiterstruktur darstellen.

Für die Gesamt-Induktivität des mit dem Magnetkern gebildeten Koppelkreises gilt dabei vorzugsweise:

$$L_{H1} \geq \frac{R}{2\pi f_0},$$

wobei
$f_0 \leq \frac{1}{2} \cdot f_{res}$ mit $f_{res}$ als ausgeprägter Resonanzfrequenz des Amplituden-Frequenzgangs des Motors ist.

Dabei kann das erfindungsgemäße Verfahren auch bei einem lektrischen Motor mit mehreren Motorsternunkten angewendet werden, insbesondere bei einem Linearmotor oder einem Torquemotor, indem das Verfahren für jeden Motorsternpunkt durchgeführt wird, wobei jeweils eine geeignete Impedanz in alle zu einem Motorsternpunkt führenden Motorphasen eingekoppelt wird. Auch hierbei kann das Eintransformieren der Impedanz am Motoreingang erfolgen, wobei dann sinnvollerweise alle Motorphasen aller Motorsternpunkte durch einen einzigen Koppelkern geführt werden, der entsprechend zu bemessen ist. Bei einem Torquemotor handelt es sich dabei um eine auf die Erzeugung hoher Drehmomente bei i.d.R. geringen Drehzahlen ausgelegte Maschine, z.B. in Form eines bürstenlosen hochpoligen permanentmagneterregten Synchronmotors.

Wenn der Umrichter mit einer Netzeingangsdrossel zur Einspeisung nach dem Hochsetzstellerprinzip betrieben wird, so ergeben sich durch die Erfindung besonders große Vorteile gegenüber völlig ungedämpften Systemschwingungen.

Des weiteren wird die vorangehend gestellte Aufgabe der Erfindung auch durch einen elektrischen Motor zum Betrieb an einem Spannungszwischenkreis-Umrichter mit eingangsseitiger Induktivität, insbesondere einer Netzeingangsdrossel, gelöst, der einen durch Eigenschaften seiner Wicklungsstränge bedingten Frequenzgang mit mindestens einer Resonanzfrequenz gegen Erdpotential aufweist und bei dem alle zu einem Motorsternpunkt führenden Motorphasen durch einen verlustbehafteten magnetisierbaren Koppelkern geführt sind. Dies lässt sich besonders einfach erreichen, indem die für die Dämpfung notwendigen Verluste durch die Eigenschaften des magnetischen Materials selbst erzeugt werden oder indem der Magnetkern eine Wicklung aufweist, die über eine Impedanz kurzgeschlossen ist. Dabei hat es sich als vorteilhaft erwiesen, wenn der Magnetkern am Eingang des Motors angeordnet ist.

Indem diese Impedanz zur Bedämpfung von durch an den Motorphasen asymmetrisch gegen Erde anregende Systemschwingungen des Umrichtersystems in den Wicklungssträngen hervorgerufenen kapazitiven Ableitströmen gegen Erdpotential ausgelegt ist, lassen sich Systemschwingungen des Umrichtersystems aufgrund dessen eingangs geschilderter Struktur eines passiven Kreises, vor allem in Verbindung mit einer Netzeingangsdrossel, und dadurch bewirkte Resonanzüberhöhungen in dem Motor besonders wirksam unterdrücken.

Dabei hat es sich als besonders günstig herausgestellt, wenn Impedanz einen ohmschen Widerstand umfasst.

Für die Bemessung dieses ohmschen Widerstands und der Gesamt-Induktivität gelten vorzugsweise die gleichen Bemessungsregeln wie beim erfindungsgemäßen Verfahren beschrieben mit

$$R_a \geq \frac{1}{2} \cdot \frac{1}{3} \cdot \sqrt{\frac{L}{C}} \quad \text{und} \quad L_{H1} \geq \frac{R}{2\pi f_0}.$$

Der Erfolg der Erfindung lässt sich dabei weiter verbessern, indem der Koppelkern derart bemessen ist, dass dieser in keinem Betriebspunkt des Motors in Sättigung geht.

Dabei hat sich die durch die Erfindung vorgeschlagene Lösung besonders bei Motoren mit Wicklungssträngen in Polspultechnik als günstig erwiesen, die jeweils eine Kettenleiterstruktur aus Induktivitäten L und Ableitkapazitäten C bilden, wobei die Impedanz zur transformatorischen Bedämpfung dieser Kettenleiterstrukturen dient.

Besonders gut gelingt dies dann, wenn die Impedanz so ausgeprägt ist, dass diese an den Motorphasen asymmetrisch gegen Erde anregende Gleichtaktströme des Umrichtersystems in der Kettenleiterstruktur bedämpft.

Jedoch lässt sich das Prinzip der Erfindung auch auf beliebige andere Bauformen von elektrischen Motoren anwenden, vor allem auch auf solche in sogenannter wilder Wicklungstechnik, insbesondere Niederspannungsmotoren. Als besonders günstig hat sich dies bei solchen Antrieben mit großen geometrischen Abmessungen erwiesen, bei denen aufgrund einer großen Nutfläche große Ableitkapazitäten bestehen, die zu besonders niedrigen Resonanzfrequenzen $f_{res}$ führen.

Solange nämlich solche ausgeprägten Resonanzstellen des Motors weit oberhalb möglicher Systemschwingungen des Umrichtersystems liegen, ist die Gefahr von Resonanzüberhöhungen im Motorsternpunkt gering. Dies ändert sich jedoch, je näher solche Resonanzfrequenzen im Frequenzgang eines Motors gegen Erdpotential in den Bereich von solchen Systemschwingungen des Umrichtersystems gelangen. Dies geschieht in erster Linie durch die Baugröße des Motors selbst. Die Größe eines Motors bedingt die Nutfläche, welche sich ihrerseits auf die Kapazität $C_M$ des Motors gegen Erdpotential auswirkt, indem diese Ableitkapazität mit der Größe der Nutfläche zunimmt. Mit zunehmender Ableitkapazität $C_M$ des Motors wiederum sinkt die ausgeprägte Resonanzfrequenz $f_{res}$ des Amplituden-Frequenzgangs des Motors gegen Erdpotential und kommt somit näher in den Bereich von unerwünschten Systemeigenfrequenzen $f_{sys}$ des Umrichtersystems. Dies hat zur Folge, dass mit zunehmender geometrischer Abmessung des Motors, z.B. der Baulänge oder dem Durchmesser, ausgeprägte Resonanzfrequenzen näher an diesen kritischen Bereich kommen und das Problem von Resonanzüberhöhungen zunimmt.

Dem wirkt die vorliegende Erfindung mit den voranstehend beschriebenen Maßnahmen wirksam und effektiv entgegen, indem ein Weg geschaffen wird, um den Frequenzgang des Motors gegen Erdpotential so zu verändern, dass praktisch keine ausgeprägten Resonanzüberhöhungen $f_{res}$ in der Nähe der Systemeigenfrequenzen $f_{sys}$ des in FIG 1 gezeigten Umrichtersystems mehr zu liegen kommen.

Weitere Details und Vorteile der Erfindung ergeben sich anhand der folgenden Darstellung eines vorteilhaften Ausführungsbeispiels und in Verbindung mit den weiteren Figuren. Dabei sind Elemente mit gleicher Funktionalität mit den gleichen Bezugszeichen gekennzeichnet. Es zeigt:

FIG 1 ein Blockschaltbild eines Umrichtersystems mit Drehstrommotor an einem Umrichter mit Spannungszwischenkreis und einem geregelten Eingangsstromrichter sowie Netzeingangsdrossel im Hochsetzstellerbetrieb,

FIG 2 ein Ersatzschaltbild des durch die in FIG 1 gezeigte Anordnung eines Umrichtersystems gebildeten passiven Kreises im Hinblick auf Systemschwingungen,

FIG 3 eine Prinzipskizze einer in einem Motor gebildeten Kettenleiterstruktur,

FIG 4 eine Prinzipskizze zur systemtheoretischen Darstellung des Wirkungspfades der Spannungen gegen Erdpotential vom Netz bis zum Motorsternpunkt,

FIG 5 eine schematische Blockdarstellung einer Topologie in einem Umrichterverband,

FIG 6 eine Prinzipskizze einer symmetrischen Ansteuerung des Motors aus dem Spannungszwischenkreis anhand von zwei Phasen L1 und L2,

FIG 7 ein Zeitdiagramm des Spannungsverlaufs zwischen diesen beiden Phasen L1 und L2 in Gegenüberstellung zu den Schaltzuständen des Wechselrichters W,

FIG 8 ein Zeitdiagramm des Spannungsverlaufs der Phase L1 gegen Erde,

FIG 9 ein entsprechendes Zeitdiagramm des Spannungsverlaufs der Phase L2 gegen Erde,

FIG 10 eine Prinzipskizze einer asymmetrischen Ansteuerung des Motors aus dem Spannungszwischenkreis als Gleichtaktsystem zur Betrachtung Phase gegen Erde,

FIG 11 ein Zeitdiagramm des asymmetrischen Spannungsverlaufs der Phasen L1 und L2 gegen Erde,

FIG 12 ein entsprechendes Zeitdiagramm des Gleichanteils des asymmetrischen Spannungsverlaufs der Phasen L1 und L2 gegen Erde,

FIG 13 ein entsprechendes Zeitdiagramm des Wechselanteils des asymmetrischen Spannungsverlaufs der Phasen L1 und L2 gegen Erde,

FIG 14 einen Amplituden-Frequenzgang eines beliebigen Motors gegen Erde zur Darstellung der Übertragungsfunktion $H_2(s)$,

FIG 15 einen Amplituden-Frequenzgang eines Motors gegen Erde ohne Berücksichtigung der mit steigender Frequenz zunehmenden Eigendämpfung zur Darstellung der Übertragungsfunktion $H_2(s)$,

FIG 16 eine Prinzipskizze einer Kettenleiterstruktur aus Vierpolen aufgebaut,

FIG 17 ein beispielhaftes Wicklungsschema einer Motorwicklung in Polspultechnologie,

FIG 18 eine Querschnittsansicht der Einbaulage dieser Polspulen im Blechpaket,

FIG 19 das asymmetrische Ersatzschaltbild einer solchen Anordnung nach FIG 17 und FIG 18,

FIG 20 die gleiche Kettenleiterstruktur wie in FIG 3 mit erfindungsgemäßem transformatorisch eingekoppeltem Dämpfungswiderstand,

FIG 21 ein Ersatzschaltbild für den Koppelkern und die Impedanz nach FIG 20 und

FIG 22 einen Vergleich des Amplituden-Frequenzgangs (Amplitudenverlauf über die Frequenz) mit und ohne transformatorisch eingekoppeltem Dämpfungswiderstand.

Die FIG 1 bis FIG 3 wurden bereits eingangs zur besseren Verständlichkeit der der Erfindung zugrunde liegenden Problematik erläutert, wobei an dieser Stelle noch einmal darauf hingewiesen sein soll, dass bereits das Erkennen der Problematik der Systemschwingungen eines Umrichterssystems nach FIG 1, vor allem mit Netzeingangsdrossel $L_K$ im Hochsetzstellerbetrieb in Verbindung mit einem Motor mit Kettenleiterstruktur K, und deren Ursache aus dem Stand der Technik nicht bekannt sind. Bereits darin ist somit eine erhebliche Leistung der vorliegenden Erfindung zu sehen.

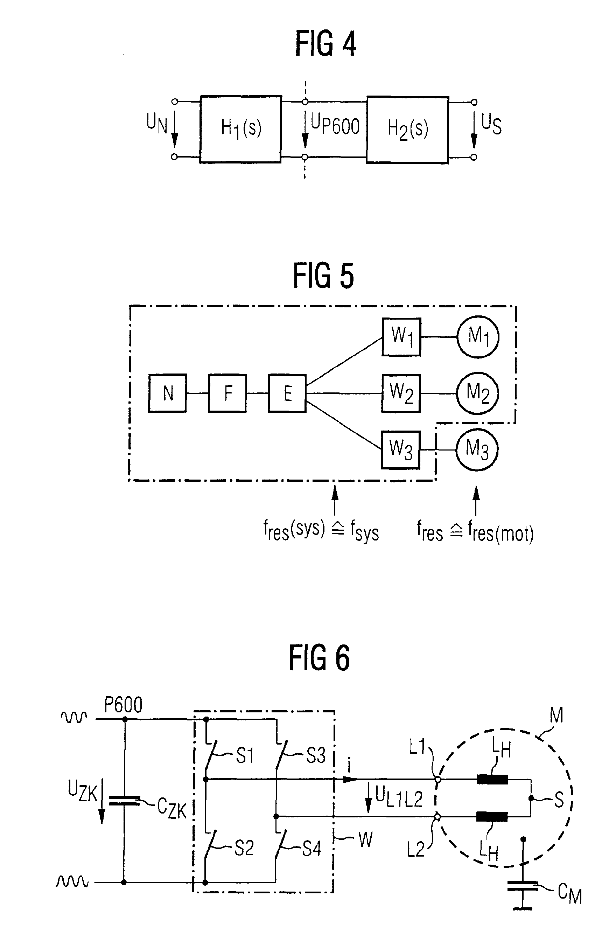

Zunächst soll ein solches in FIG 1 gezeigtes Umrichtersystem systemtheoretisch im Hinblick auf einen Wirkungspfad vom Netz bis zum Motorsternpunkt betrachtet werden. Dazu zeigt FIG 4 eine entsprechende Prinzipskizze mit der eingangsseitigen Netzspannung $U_N$ gegen Erde, die über den Umrichterverband mit einer ersten Übertragungsfunktion $H_1(s)$ in die Spannung $U_{P600}$ der positiven Zwischenkreisschiene gegen Erde umgesetzt wird. Im Motor wird diese Spannung $U_{P600}$ über eine zweite Übertragungsfunktion $H_2(s)$ in eine am Motorsternpunkt S anstehende Spannung $U_S$ gegen Erde umgesetzt.

Dabei ist zu berücksichtigen, dass in der Praxis häufig mehrere Motoren an einem Umrichterverband betrieben werden, indem mehrere Wechselrichter $W_1$ bis $W_3$ mit angeschlossenen Motoren $M_1$ bis $M_3$ aus der Zwischenkreisspannung $U_{ZK}$ gespeist werden. Die Darstellung nach FIG 5 zeigt ein Beispiel einer Topologie eines solchen Umrichterverbands. Aus dem Netz N wird über die Filteranordnung F der Eingangsstromrichter E gespeist, welcher mehrere Wechselrichter $W_1$ bis $W_3$ mit angeschlossenen Motoren $M_1$ bis $M_3$ aus der Zwischenkreisspannung $U_{ZK}$ speist.

Zwischen den jeweiligen Wechselrichtern $W_1$ bis $W_3$ an den angeschlossenen Motoren $M_1$ bis $M_3$ ist hinsichtlich der Systemschwingungen zu berücksichtigen, dass auf Seiten des Umrichterverbands mit N, F, E, $W_1$ bis $W_3$ als Systemeigenfrequenz $f_{sys}$ vorliegt, welche die Resonanzfrequenz $f_{res}(sys)$ des Systems beschreibt. Die Motoren $M_1$ bis $M_3$ hingegen weisen ihrerseits eine eigene Resonanzfrequenz $f_{res}$ auf, die der Ei-

genfrequenz $f_{res}$(mot) des jeweiligen Motors entspricht.

Die in FIG 4 angestellte systemtheoretische Betrachtung erfolgt somit getrennt für den jeweiligen Motor, weshalb der Umrichterverband mit der Übertragungsfunktion $H_1$(s) bei einer Topologie, wie in FIG 5 gezeigt, den Filter F, die Induktivität $L_K$, den Eingangsstromrichter E, alle Wechselrichter W, alle anderen Motoren M sowie alle Leitungen LT umfasst.

In einem solchen oder einem Umrichterverband allgemein kann sich, wie eingangs beschrieben, eine Systemschwingung ausbilden, die insbesondere durch das Takten einer Einspeisung E und in geringerem Maße auch durch das Takten der Wechselrichter W der Achsmodule angeregt wird. Dieses Takten bewirkt ein periodisches Umladen der parasitären Kapazitäten, die bereits anlässlich von FIG 1 beschrieben wurden.

Betrachtet man die Netzspannung $U_N$ als Eingangsgröße, dann wird diese mit der Übertragungsfunktion $H_1$(s) auf die Ausgangsgröße $U_{P600}$ (bei Betrachtung der positiven Zwischenkreisschiene P600) abgebildet. Die Spannung $U_{P600}$ liegt, bis auf 600V Gleichanteile, gleichtaktig an den Motorklemmen an, was einem asymmetrischen System bzw. Nullsystem entspricht.

Die Motorleitung LT kann theoretisch sowohl $H_1$(s) als auch $H_2$(s) zugeordnet werden. Qualitativ gelten die Aussagen für beide Fälle. Hier soll die Motorleitung LT - wie erwähnt - zu $H_1$(s) gehören. Im betrachteten Frequenzbereich ist die Leitung LT als elektrisch kurz anzusehen.

Wie bereits geschildert, hat der dadurch gebildete und in FIG 2 gezeigte passive Kreis eine natürliche Resonanzfrequenz $f_{res}$(sys) bzw. $f_{sys}$, auf die sich dieses System einschwingt. Als Folge bekommen die Potenziale der Zwischenkreisschienen P600 und M600 zusätzlich zu den betriebsbedingten Verschiebungen mit beispielsweise 600V Amplitude eine zusätzliche unerwünschte Schwingung mit einer Amplitude von bis zu einigen hundert Volt aufmoduliert.

Dies hat zur Folge, dass die Ausgangsspannungen des Wechselrichters W gegen Erde nicht mehr blockförmig sind, wie dies zwischen zwei Phasen U, V, W der Fall ist, sondern die Ausgangsspannungen stellen Ausschnitte aus den Systemschwingungen auf die Zwischenkreisschienen P600 und M600 dar.

Dies lässt sich am besten veranschaulichen, wenn man die in FIG 6 gezeigte Prinzipskizze einer symmetrischen Ansteuerung des Motors M aus dem Spannungszwischenkreis $C_{ZK}$ anhand von zwei beispielhaften Phasen L1 und L2 zugrunde legt. Es ist der Zwischenkreis mit der Zwischenkreiskapazität $C_{ZK}$ und den Zwischenkreisschienen P600 und M600 gezeigt, aus dem über einen vereinfachten Wechselrichter in Brückenschaltung mit den Schaltern S1 bis S4 eine Spannung $U_{L1L2}$ bzw. ein Strom i zur Speisung zweier im Motorsternpunkt S verbundener Stränge L1 und L2 des Motors M mit jeweiligen Induktivitäten $L_H$ erfolgt. Der Motor weist die bereits erläuterte Ableitkapazität $C_M$

gegen Erdpotenzial auf.

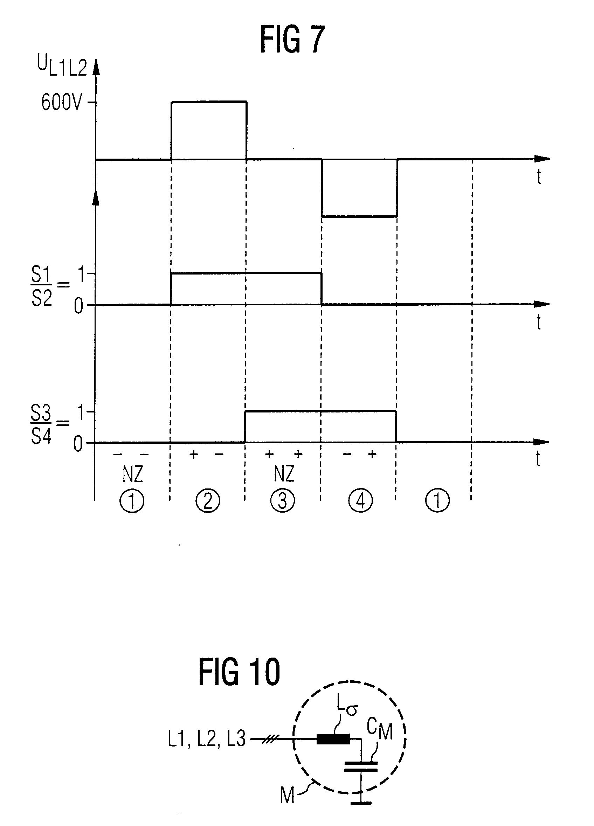

Die Darstellung nach FIG 7 zeigt den Verlauf der Spannung $U_{L1L2}$ zwischen den Phasen L1 und L2 über die Zeit t gegenübergestellt mit den jeweiligen Schaltzuständen der Schalter S1 bis S4 der Brücke des Wechselrichters W, welche darunter ebenfalls über die Zeit t aufgetragen sind. Die Schalter S1 und S2 stellen den ersten Brückenzweig, die Schalter S3 und S4 den zweiten Brückenzweig dar. Dabei sind Schalter einer Phase immer invers zueinander, da andernfalls der Zwischenkreis kurzgeschlossen würde.

Zur Veranschaulichung der Schaltzustände der beiden Brückenzweige S1/S2 und S3/S4 sind die vier Zustände 1, 2, 3 und 4 angenommen. Im Zustand 1 gilt S1=0, S2=1 und S3=0, S4=1 mit dem Zustand ‚--' für die Phasen L1 und L2. In diesem Fall werden also sogenannte Nullzeiger NZ geschaltet und zwischen den Phasen L1 und L2 liegt keine Spannung $U_{L1L2}$ an.

Im Zustand 2 gilt S1=1, S2=0 und S3=0, S4=1. Daraus resultiert der Zustand ‚+-' mit einer Spannung $U_{L1L2}$ von 600V zwischen den Phasen L1 und L2.

Im Zustand 3 gilt S1=1, S2=0 und S3=1, S4=0. Daraus resultiert der Zustand ‚++', es werden also wiederum sogenannte Nullzeiger NZ geschaltet und zwischen den Phasen L1 und L2 liegt keine Spannung $U_{L1L2}$ an.

Im Zustand 4 schließlich gilt S1=0, S2=1 und S3=1, S4=0. Daraus resultiert der Zustand ‚-+' mit einer Spannung $U_{L1L2}$ von -600V zwischen den Phasen L1 und L2. Anschließend beginnt eine neuer Zustand 1 usw..

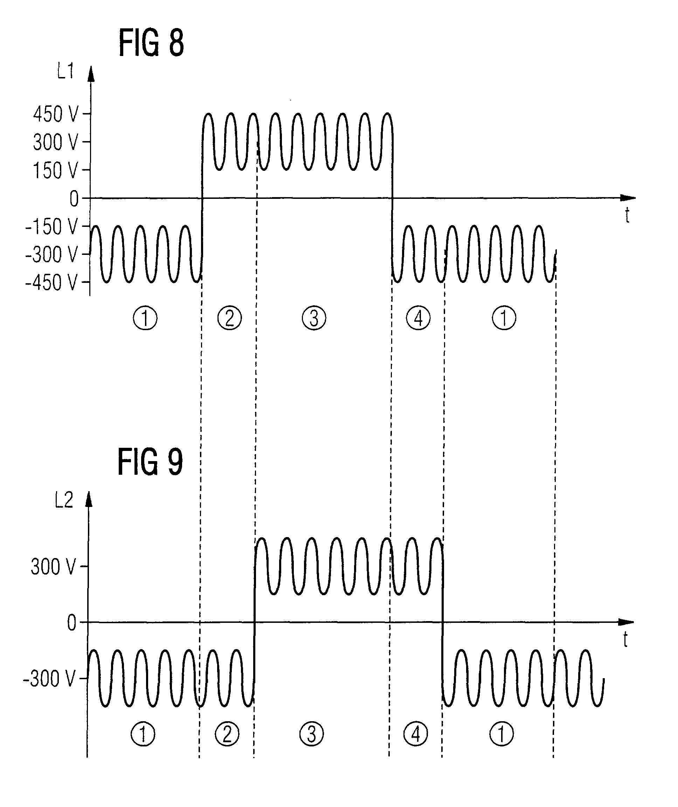

In der Darstellung nach FIG 8 ist ebenfalls für diese Zustände 1 bis 4 der Verlauf der Spannung an der Phase L1 gegen Erde über die Zeit t gezeigt, also asymmetrisch betrachtet. Dabei ist das vorangehend geschilderte Phänomen zu erkennen, wonach der Spannungsverlauf nicht ideal blockförmig ist, sondern die unerwünschten Systemschwingungen des Umrichtersystems aus FIG 1 bzw. FIG 4 mit einer beispielhaften Amplitude von ca. 150V aufmoduliert sind. Das gleiche gilt u.U. mit einer konstanten Amplitudenverschiebung für den asymmetrischen Spannungsverlauf der Phase L2 gegen Erde, der in FIG 9 gezeigt ist. Man erkennt, dass beide Phasen L1 und L2 und damit auch die Zwischenkreisschienen P600 und M600 gleichtaktig schwingen. D.h. diese werden stets "parallel" verschoben, also ohne eine Phasenverschiebung.

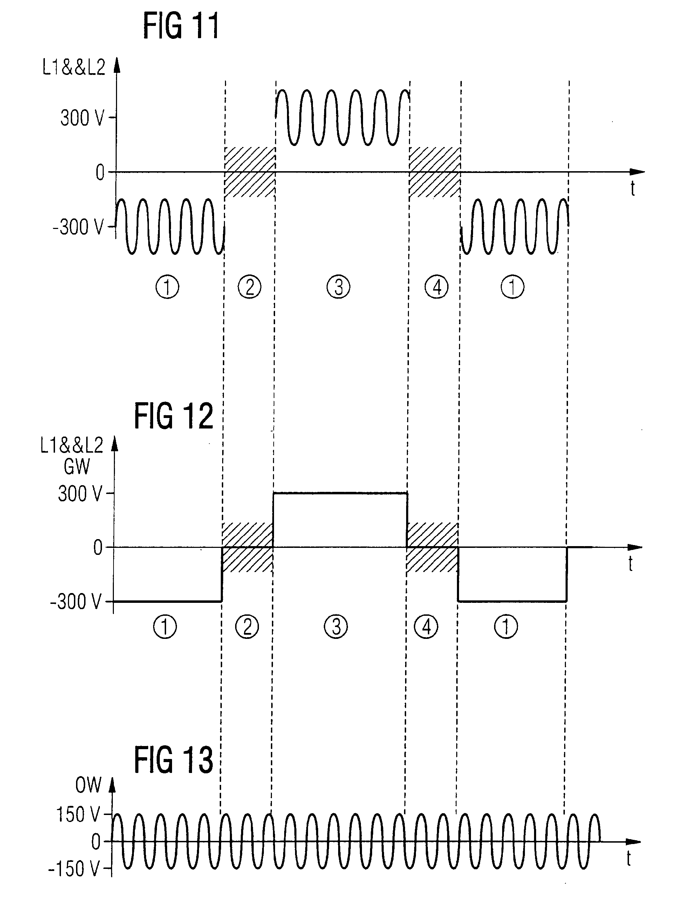

Daran wird deutlich, dass das Problem möglicher Resonanzüberhöhungen im wesentlichen durch asymmetrische Ströme i hervorgerufen wird. Aus diesem Grund lohnt sich die Betrachtung der Anordnung als Gleichtaktsystem, wie diese ausschnittsweise in FIG 10 in Form einer Prinzipskizze einer asymmetrischen Ansteuerung des Motors M aus dem Spannungszwischenkreis $C_{ZK}$ gezeigt ist. Dabei wird somit davon ausgegangen, dass alle Motorphasen U, V, W bzw. L1 bis L3 eine durch die Motorwicklung bedingte Induktivität $L_\sigma$ bilden, die durch die Ableitkapazität $C_M$ gegen Erde abgeschlossen wird.

Betrachtet man nun wiederum die beiden Phasen L1 und L2, nunmehr jedoch gemeinsam im Gleichtaktsystem (im folgenden mit L1&&L2 gekennzeichnet), so ergibt sich der in FIG 11 gezeigte Verlauf der Spannung gegen Erde. Aus der aus FIG 6 und FIG 7 erkennbaren "parallelen" Verschiebung der einzelnen Phasen L1, L2 kann im Gleichtaktsystem für L1&&L2 in den Zuständen 2 und 4 kein Gleichtaktsignal skizziert werden, weil hier die Phasen L1 und L2 auf unterschiedlichem Potential liegen (im skizzierten Fall beträgt der Abstand eine Gleichspannung von 600 Volt). Weil nur zwei Phasen betrachtet werden, liegen diese im Mittel gleichtaktig bei 0 Volt. In den übrigen Zuständen 1 und 3 entspricht der Spannungsverlauf von L1&&L2 dem von L1 in FIG 8 und L2 in FIG 9.

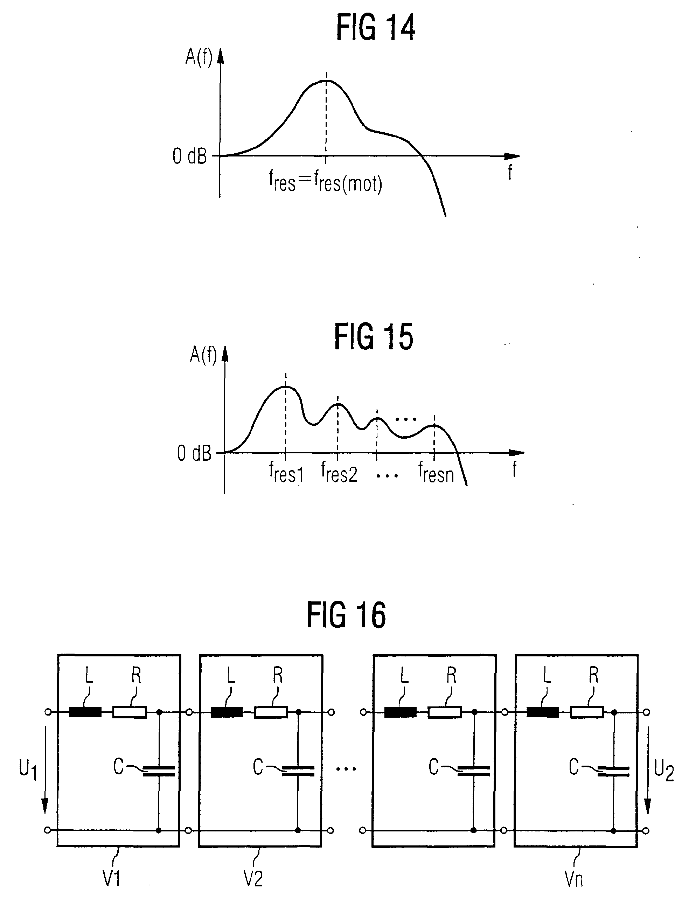

Der in FIG 11 gezeigte Spannungsverlauf von L1&&L2 im Gleichtaktsystem lässt sich dabei in eine Grundwelle GW und eine Oberwelle OW trennen. Diese sind getrennt in FIG 12 und FIG 13 gezeigt.

Aus der Darstellung nach FIG 12 ist der Spannungsverlauf der Grundwelle GW zu entnehmen. Dabei wird deutlich, dass dieser die gewünschten blockförmigen Schaltzustände beschreibt mit -300V in Zustand 1, 0V in den Zuständen 2 und 4 aufgrund der "parallelen" Verschiebung und +300V im Zustand 3. Die in FIG 13 gezeigte Oberwelle OW des Spannungsverlaufs L1&&L2 beschreibt einen im wesentlichen konstanten sinusförmigen Verlauf mit einer Amplitude von beispielhaft 150V.

Die Oberwelle bzw. Systemschwingung liegt somit in allen Zuständen 1 bis 4 am Motor M an, wodurch dieser Phase-Erde-Schwingkreis, wie in FIG 2 gezeigt, im Motor M ständig angeregt wird. Wenn diese Systemschwingung nun in der Nähe einer Motoreigenfrequenz liegt bzw. der Motor M eine ausgeprägte Resonanz in der Nähe der Frequenz der Systemschwingung aufweist, kann es zu unerwünschten Resonanzüberhöhungen kommen. Ein "maximales" Aufschwingen dieses Phase-Erde-Schwingkreises wird in der Regel lediglich durch die Brüche in der Oberwelle aufgrund des Schaltens von einem Zustand in den nächsten verhindert.

Im Hinblick auf die vorangehend erwähnte systemtheoretische Betrachtung der Problematik nach FIG 4 hängt die Amplitude einer solchen Systemschwingung $f_{sys}$ dabei im wesentlichen von zwei Faktoren ab. Dies ist zum einen die intrinsische Dämpfung im System, die umgekehrt proportional zur Güte des Schwingkreises ist, wobei die Dämpfung mit steigender Frequenz zunimmt. Zum anderen ist es die Anregung, d.h. die Art der Einspeisung (z.B. Diodeneinspeisung oder geregelte Einspeisung) und die Höhe der Zwischenkreisspannung $U_{ZK}$.

Besonders ausgeprägte Systemeigenschwingungen lassen sich damit bei Umrichtersystemen beobachten, die viele Achsmodule W und Motoren M sowie lange Motorleitungen LT haben.

Der Frequenzbereich der Systemeigenschwingungen $f_{sys}$ reicht dabei in der Regel von ca. 10kHz für große Umrichtersysteme bis über 50kHz für kleinere Umrichtersysteme.

Amplitude und Frequenz hängen somit von der Konfiguration und dem Ausbaugrad des Systems ab, z. B.:

- Art der Einspeisung E (geregelt oder ungeregelt)
- Anzahl der Achsen bzw. Motoren M, die an einem Umrichtersystem UR betrieben werden
- Länge der Leistungsleitungen LT

Es bleibt somit an dieser Stelle festzuhalten, dass Umrichtersysteme mit Spannungszwischenkreis Eigenschwingungen der Zwischenkreisschienen P600, M600 gegen Erde aufweisen können. Diese sind besonders ausgeprägt bei mehrachsigen Systemen und bei geregelten Netzeinspeisungen im Eingangsstromrichter E, vor allem im Hochsetzstellerbetrieb. Damit wird der Motor M im asymmetrischen System unabhängig von den Pulsmustern der einzelnen Phasen U, V, W bzw. L1 bis L3 nahezu monofrequent angeregt. Mit der Übertragungsfunktion $H_2(s)$ wird diese Anregung auf die Ausgangsseite, nämlich die Spannung $U_S$ am Sternpunkt S gegen Erde, abgebildet.

Alle elektrischen Motoren M, gleich welcher Bauform, haben qualitativ den in der Darstellung nach FIG 14 gezeigten Amplituden-Frequenzgang A(f) ihrer Übertragungsfunktion $H_2(s)$ gegen Erde. Dieser weist eine ausgeprägte Resonanzfrequenz $f_{res}(mot)$ bzw. $f_{res}$ auf. Die Übertragungsfunktion $H_2(s)$ kann dabei beschrieben werden als:

$$H_2(s) = U_{P600} / U_S .$$

Die Frequenz der ausgeprägten Resonanzüberhöhung des Motors hängt von den induktiven und kapazitiven Elementen im Motor gegen Erde ab und bestimmt sich damit nach:

$$f_{res} \propto \frac{1}{\sqrt{L_M \cdot C_M}}$$

mit $L_M = f(L_{PE})$ als wirksamer Induktivität und $C_M = f(C_{PE})$ als wirksamer Kapazität des Motors M gegen Erdpotential PE bzw. im Nullsystem. Die genauen Funktionen hängen dabei vom jeweiligen Messverfahren und den verwendeten Ersatzschaltbildern ab.

Bei mehreren Sternpunkten S liegt eine Parallelschaltung identischer Schwingkreise vor. Die Kapazität pro Schwingkreis bestimmt sich dabei nach:

$$\tilde{C} \propto \frac{C_M}{Anz_S} \qquad .$$

Die Induktivität hängt von der Anzahl der in Reihe geschalteten Spulen ab, wobei vor allem in der Polspultechnik mehrere Sternpunkte S vorkommen. Da die einzelnen Spulen als magnetisch voneinander entkoppelt angesehen werden können, gilt ferner:

$$\tilde{L} \propto \frac{n_{1S}}{Anz_S}$$

mit $n_{1S}$ als Anzahl der Spulenbaugruppen bei einem Sternpunkt S und $Anz_S$ der Anzahl der Sternpunkte S.

Damit gilt für Motoren gleicher Baugröße, aber unterschiedlicher Verschaltung identischer Spulengruppen:

$$f_{res} \propto \frac{1}{\sqrt{\frac{1}{Anz_s} \cdot \frac{1}{Anz_s}}} \propto Anz_s.$$

Der Einfluss der Motorgröße auf die Resonanzfrequenz $f_{res}$ kann folgendermaßen abgeschätzt werden:

$$C = \frac{\varepsilon \cdot A}{d}$$

mit

$$A \propto Nutfläche \propto D \cdot LG ,$$

wobei D den Durchmesser und LG die Länge des Motors darstellen.

Damit gilt für den Einfluss der Motorgröße bei ansonsten konstanten Eigenschaften:

$$f_{res} \propto \frac{1}{\sqrt{Nutfläche}} \propto \frac{1}{\sqrt{D \cdot LG}}.$$

Ohne Berücksichtigung der mit steigender Frequenz f zunehmenden Eigendämpfung aufgrund von Wirbelstromverlusten, Ummagnetisierungen etc. und insbesondere, wenn der Motor M als Kettenleiter K verstanden wird, was vor allem bei Motoren in Polspultechnologie aufgrund der in Reihe geschalteten Spulengruppen makroskopisch plausibel erscheint, ergibt sich der in FIG 15 gezeigte Amplituden-Frequenzgang A(f).

Dieser weist mehrere lokale Maxima auf, welche mehrere Resonanzfrequenzen $f_{res\,1}$ bis $f_{res\,n}$ beschreiben, wobei die erste Resonanzüberhöhung $f_{res\,1}$, die bei der niedrigsten Frequenz liegt, dominant ist und damit die bestimmende bzw. ausgeprägte Resonanzfrequenz $f_{res}$ darstellt.

Es existieren somit Frequenzen, insbesondere die niedrigste Resonanzfrequenz $f_{res}$, bei denen am Motorsternpunkt S wesentlich höhere Spannungen auftreten als an den Eingangsklemmen des Motors M, die beispielsweise um den Faktor 3 bis 4 höher liegen. Dabei ist festzustellen, dass die Resonanzüberhöhung umso höher ist, je niedriger $f_{res}$ liegt. Besonders gefährdet sind somit geometrisch große Torquemotoren, bei denen sich über die Nutfläche und mehrere Sternpunkte S besonders leicht Resonanzstellen $f_{res}$ bilden lassen, die in der Nähe oder genau auf der Frequenz $f_{sys}$ der Systemeigenschwingungen liegen.

Diese Erkenntnisse sind bedeutsam, wenn man sich die Kettenleiterstruktur K vor Augen hält, wie sie in FIG 3 gezeigt ist. Eine solche kann nämlich nicht nur makroskopisch bei Motoren in Polspultechnologie angenommen werden, sondern im Prinzip auch bei anderen Bauformen. Dazu kann man den Motor M mit seiner Motorwicklung auch ganz allgemein als einen aus gleichen Vierpolen V1 bis Vn zusammengesetzten mikroskopischen Kettenleiter K betrachten, wie er in der Darstellung nach FIG 16 gezeigt ist. Jeder Vierpol V1 bis Vn umfasst dabei eine Induktivität L, die mit einem ohmschen Widerstand R in Reihe geschaltet ist. Die Ausgangsspannung fällt dabei parallel zu einer Kapazität C ab, die mit L und R als Spannungsteiler geschaltet ist.

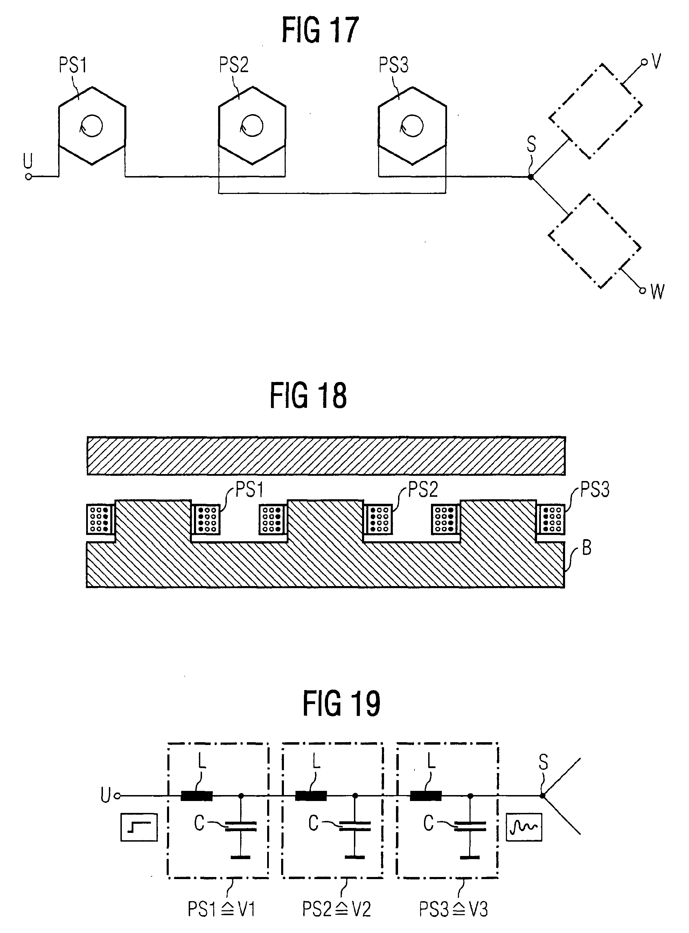

Zur Verdeutlichung dieses Aufbaus soll zunächst noch einmal näher auf die Kettenleiterstruktur K eingegangen werden. Dazu ist in den FIG 17 bis 19 der Aufbau einer Motorwicklung in Polspultechnologie deren asymmetrischem elektrischen Ersatzschaltbild gegenübergestellt. In der Darstellung nach FIG 17 ist beispielhaft eine Spulengruppe in der Phase U gezeigt. Eine jede Spulengruppe der Motorwicklung MW, bestehend aus mehreren hintereinandergeschalteten Polspulen PS1 bis PS3, sofern es sich um einen Aufbau in Polspultechnik handelt, bildet bezüglich Erde einen makroskopischen LC-Kettenleiter mit einer Induktivität L und einer Kapazität C. Anfang und Ende dieses Kettenleiters K sind Eingangsklemme und Sternpunkt S des Motors M. Dieser Kettenleiter K hat, wie vorangehend dargestellt, mehrere Resonanzfrequenzen $f_{res}$.

Wird ein solcher Kettenleiter am Anfang (Phase gegen Erde) z.B. sinusförmig mit seiner niedrigsten Eigenfrequenz $f_{res}$ erregt, welche in der Regel am ausgeprägtesten ist, so kann er am Ende (Sternpunkt S gegen Erde) eine wesentlich höhere Spannung liefern als am Anfang. Diese Spannung kann im ungünstigsten Fall bis zum Durchschlag der Hauptisolation in der Nähe des Sternpunkts S führen.

Eine solche sinusförmige Erregung kann vor allem durch eine im vorangehenden beschriebene ungewollte Systemschwingung $f_{sys}$ des gesamten Umrichtersystems erfolgen, welche den gewollten Schaltvorgängen in den Leistungsteilen überlagert ist.

Der beschriebene Mechanismus ist am deutlichsten im Stillstand ausgeprägt, da hier alle Phasen U, V, W bzw. L1, L2, L3 gleichzeitig geschaltet werden. Die Eigenfrequenzen und Dämpfungen des Kettenleiters K hängen von Aufbau der Motorwicklung ab, z.B. von:

- der Anzahl der Spulen pro Zweig
- der Windungszahl (Induktivität)
- der Gestalt der Spulen (Kapazität)
- dem Verguss (Kapazität)

Die Darstellung nach FIG 18 verdeutlicht, wie aus einem beispielhaften Wicklungsschema nach FIG 17 und der Einbaulage der Polspulen im Blechpaket B das asymmetrische Ersatzschaltbild einer solchen Anordnung nach FIG 19 hervorgeht.

Durch die geordnete Wicklung hat die erste Lage (gekennzeichnet durch ausgefüllte Kreise) einer Polspule PS1 bis PS3 stets eine größere Kapazität C gegenüber dem Blechpaket B (Erdpotential) als die übrigen Lagen (gekennzeichnet durch nicht ausgefüllt Kreise).

Die jeweilige Induktivität L wird durch die jeweilige Polspule PS1, PS2, PS3 selbst gebildet, wobei angenommen wird, dass die Gegeninduktivität zwischen den Spulen zunächst vernachlässigt werden kann, da bei den betrachteten Frequenzen (z.B. 20 kHz) das Eisen den magnetischen Fluss nur noch wenig verstärkt und lenkt. Dies wird dadurch bestätigt, dass das Weglassen des Sekundärteils die Messwerte (Frequenz, Amplitude) kaum verändert.

Die gezeigte Struktur besitzt so viele Kettenleiterglieder (n = 3) wie Polspulen PS1 bis PS3. Besteht ein Strang aus m parallelgeschalteten Zweigen (Kettenstrukturen), so sind für den Betrieb mit Nullzeiger NZ (gleichzeitiges Schalten aller Eingangsklemmen) für die Phasen U, V, W somit m = 3 Zweige parallel geschaltet.

In FIG 19 nicht eingezeichnet ist die im System vorhandene Dämpfung. Sie soll zunächst als ohmscher Widerstand R einer jeden Induktivität L angesehen werden.

Im folgenden Beispiel wird für einen Motor M mit Hilfe der Größen $L_Z$, $C_M$, m und n die Übertragungsfunktion der in FIG 16 gezeigten Kettenleiterstruktur aus Vierpolen V1 bis Vn von den Phasenklemmen zum Sternpunkt S berechnet.

Dabei wird mit $C_M$ die Wicklungs-Erd-Kapazität sowie mit $L_Z$,$R_Z$ die Impedanz eines Wicklungszweigs beschrieben. Unter einem Wicklungszweig werden in diesem Fall die hintereinandergeschalteten Spulen von einer Phasenklemme U, V oder W bis zu einem Sternpunkt S verstanden, wobei eventuell vorhandene Parallelschaltungen innerhalb eines Strangs abgetrennt sind.

Daraus lassen sich die Parameter eines Kettenleiterglieds bzw. Vierpols folgendermaßen bestimmen:

$$L = \frac{L_z}{n}$$

$$C = \frac{C_M}{3 \cdot n \cdot m}$$

m: Anzahl der parallelen Zweige
n: Anzahl der Spulen in Reihe

Für den Verlustwiderstand R der Induktivität L wird zunächst
$R = \frac{R_Z}{n}$ gesetzt, wobei der Wert für $R_Z$ im Reihenmodell beispielsweise bei 10kHz ermittelt wird.

Dieser Wert kann nur ein erster Anhaltspunkt sein, da R stark frequenzabhängig ist, und bei einer tieferen Frequenz als den tatsächlich auftretenden Frequenzen ermittelt wird.

Die Z-Matrix eines einzelnen Vierpol-Glieds $\underline{Z}_V$ lautet:

$$\underline{Z}_v = \begin{bmatrix} R + sL + \dfrac{1}{sC} & \dfrac{1}{sC} \\ \dfrac{1}{sC} & \dfrac{1}{sC} \end{bmatrix}$$

Daraus lässt sich die Kettenmatrix $\underline{A}_V$ bilden:

$$\underline{A}_v = \begin{bmatrix} s^2 LC + sRC + 1 & sL + R \\ sC & 1 \end{bmatrix}$$

Die A-Matrix des gesamten Kettenleiters K ist dann:

$$\underline{A}_{ges} = \underline{A}_v{}^n$$

mit dem Element

$$\underline{A}_{ges}[1,1] = \frac{\underline{U}_1}{\underline{U}_2}$$

Damit ist der Amplituden-Frequenzgang A(s) als komplexe Verallgemeinerung von A(f):

$$A(s) = 20\lg\left(\left|\frac{1}{\underline{A}_{ges}[1,1]}\right|\right) \quad \text{in dB}$$

Nimmt man an, dass der Dämpfungswiderstand R mit der Frequenz zunimmt, so würden die höheren Resonanzfrequenzen noch stärker gedämpft.

Bildet man aus der A-Matrix des gesamten Kettenleiters K die Z-Matrix so ist das Element $Z_{in}$ gleich der Eingangsimpedanz des Kettenleiters.

Daraus ergibt sich die Eingangsimpedanz:

$$Z_{in} = \left|\frac{\underline{Z}_{ges}[1,1]}{m \cdot n}\right| = \frac{1}{m \cdot n} \cdot \left|\frac{\underline{A}_{ges}[1,1]}{\underline{A}_{ges}[2,1]}\right|$$

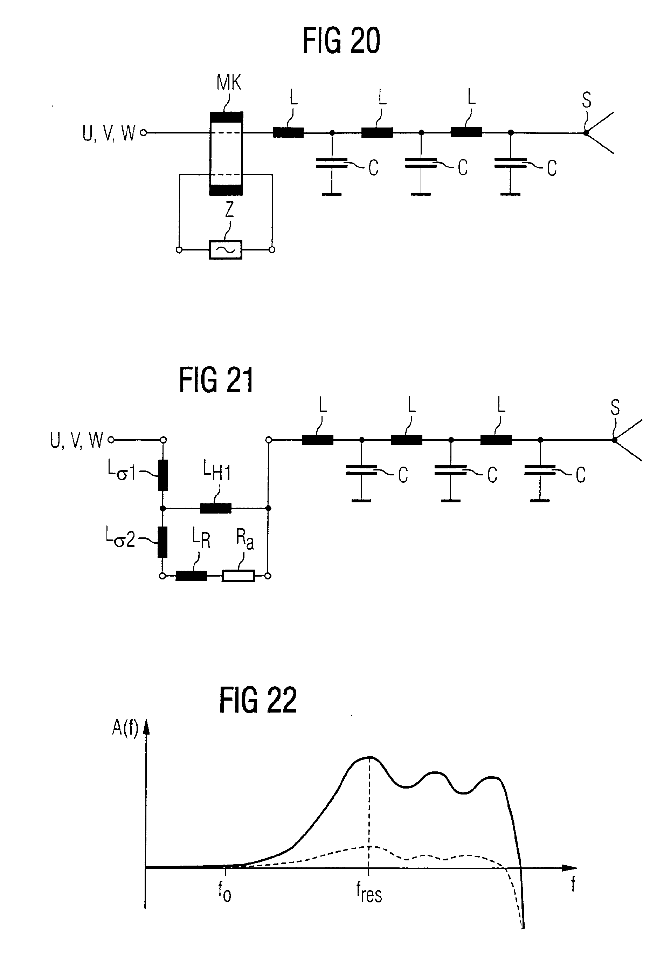

Die Darstellung nach FIG 20 zeigt nun eine Prinzipskizze einer in einem Motor M gebildeten Kettenleiterstruktur K, wie sie anlässlich von FIG 3 erläutert wurde, nunmehr jedoch mit einer erfindungsgemäßen transformatorisch in alle drei Phasen U, V, W des Motors M eingekoppelten Impedanz $\underline{Z}$.

Dies geschieht z.B. dadurch, dass jede Phase U, V, W des Motors M, deren Wicklungsstrang einen Kettenleiters K darstellt, durch ein und denselben Magnetkern MK geführt wird, der entweder aufgrund seiner Materialeigenschaften ausreihend verlustbehaftet ist oder aber über eine Wicklung verfügt, die mit einer Impedanz $\underline{Z}$ elektrisch kurzgeschlossen ist (so in FIG 20). Indem alle Phasen durch einen Magnetkern MK geführt werden, werden nur die störenden Gleichtaktvorgänge im Hinblick auf die Systemeigenschwingungen des Umrichtersystems bedämpft.

Die FIG 21 zeigt nun das transformatorische Ersatzschaltbild zu der Anordnung nach FIG 20. Der Magnetkern MK wird dabei durch das Vierpol-Ersatzschaltbild eines Transformators mit der Hauptinduktivität des Transformators bzw. der Gesamt-induktivität des Koppelkerns $L_{H1}$ sowie den Streuinduktivitäten $L_{\sigma 1}$ und $L_{\sigma 2}$ beschrieben. Die Impedanz $\underline{Z}$ besteht dabei aus einer Reihenschaltung aus einem ohmschen Dämpfungswiderstand $R_a$ und einer parasitären Induktivität $L_R$, die in der Regel schon durch die Zuleitungen des Widerstands gebildet wird. Selbstverständlich kann die Impedanz $\underline{Z}$ auch weitere Elemente wie z.B. Kapazitäten umfassen, die dazu dienen, $L_{\sigma 2}$ und $L_R$ zu kompensieren.

Anhand dieses Ersatzschaltbildes für den Koppelkern MK und die Impedanz $\underline{Z}$ lassen sich nun $R_a$ und $L_{H1}$ so bemessen, dass eine befriedigende Dämpfungswirkung bei minimierten Verlusten in der Impedanz $\underline{Z}$ erreicht wird. Dies ist der Fall, wenn eine genügend große Zeitkonstante erzielt wird, die etwa der Hälfte der niedrigsten Motor-Resonanzfrequenz $f_{res}$ entspricht.

Die Auslegung des ohmschen Anteils $R_a$ hat dazu vorteilhafterweise nach

$$R_a \geq \frac{1}{2} \cdot \frac{1}{3} \cdot \sqrt{\frac{L}{C}}$$

zu erfolgen. Dabei beschreibt L die Induktivität und C die Ableitkapazität eines Vierpoles V1..Vn bzw. eines Kettenleiter-LC-Gieds wie in FIG 16 oder FIG 19 gezeigt.

Die Auslegung der Hauptinduktivität des Transformators bzw. Gesamtinduktivität des Koppelkerns MK erfolgt vorteilhafterweise nach

$$L_{H1} \geq \frac{R}{2\pi f_0}$$

mit

$f_0 \leq \frac{1}{2} \cdot f_{res}$ mit $f_{res}$ als ausgeprägter Resonanzfrequenzfrequenz des Motors M.

Daran wird ersichtlich, dass die Induktivität $L_{H1}$ nicht durch Sättigungseffekte reduziert werden sollte. Aus diesem Grund sollte der Koppelkern MK so bemessen werden, dass er in allen Betriebspunkten nicht in Sättigung gehen kann.

Aus der Darstellung nach FIG 22 ist der Amplituden-Frequenzgang A(f) gegen Erdpotential mit und ohne erfindungsgemäßer transformatorisch in alle drei Phasen U, V, W des Motors M eingekoppelter Impedanz $\underline{Z}$ gezeigt. Der ungedämpfte Verlauf entspricht dem in FIG 15 gezeigten mit der ersten Resonanzfrequenz als ausgeprägtester Resonanzfrequenz $f_{res}$. Mit transformatorischer Bedämpfung der unerwünschten Gleichtaktvorgänge, wie vorangehend beschrieben bemessen, ergibt sich der punktierte Verlauf, wo die Resonanzüberhöhung bei $f_{res}$ wesentlich geringer ist. Sollte diese also in der Nähe der Systemeigenfrequenz $f_{sys}$ des Umrichtersystems liegen, so sind keine Resonanzüberhöhungen mit den geschilderten negativen Folgen zu erwarten.

Vorteile der Erfindung sind zum einen eine Entlastung des Isoliersystems gegen Erde, was die Zuverlässigkeit und Robustheit des Motors steigert. Zum anderen können teure und die Auslastung des Motors verringernde Zusatzisolierungen im Motor entfallen, weil die Spannungsbelastung in Bereichen bleibt, die nach heutigem Stand der Technik bei Niederspannungsmotoren als mit Standardwerkstoffen beherrschbar gelten.

Das gleiche Prinzip kann auch bei mehreren Motorsternpunkten S angewandt werden, wie es z.B. in Linearmotoren oder Torquemotoren der Fall ist. Dazu wird jeweils für jeden Motorsternpunkt S eine geeignete Impedanz $\underline{Z}$ in alle zu einem einzelnen Motorsternpunkt S führenden Motorphasen U, V, W transformatorisch eingekoppelt. Im Prinzip sind Resonanzüberhöhungen auch bei Motoren in sog. wilder Wicklung (Standard bei Niederspannungsmotoren) vorhanden, so dass die Erfindung sinngemäß auch für diese und andere Motoren als die zur Veranschaulichung gewählten Motoren in Polspultechnologie einsetzbar ist.

**Patentansprüche**

1. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M), der aufgrund von Eigenschaften seiner Wicklungsstränge einen Frequenzgang mit mindestens einer Resonanzfrequenz ($f_{res}$) gegen Erdpotential aufweist, indem in alle zu einem Motorsternpunkt (S) führenden Motorphasen (U, V, W) eine Impedanz ($\underline{Z}$) zur Bedämpfung von durch an den Motorphasen (U, V, W) asymmetrisch gegen Erde anregende Systemschwingungen ($f_{sys}$) des Umrichtersystems ($L_K$, UR, L, M) in den Wicklungssträngen hervorgerufenen kapazitiven Ableitströmen gegen Erdpotential eintransformiert wird.

2. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M), der aufgrund von Eigenschaften seiner Wicklungsstränge einen Frequenzgang mit mindestens einer Resonanzfrequenz ($f_{res}$) gegen Erdpotential aufweist, insbesondere nach Anspruch 1, indem alle zu einem Motorsternpunkt (S) führenden Motorphasen (U, V, W) durch einen verlustbehafteten magnetisierbaren Koppelkern (MK) geführt werden.

3. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) nach Anspruch 2, wobei der Koppelkern (MK) eine Wicklung aufweist, die über eine Impedanz ($\underline{Z}$) kurzgeschlossen ist.

4. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) nach Anspruch 2 oder 3, wobei alle zu einem Motorsternpunkt (S) führenden Motorphasen (U, V, W) am Eingang des Motors (M) durch den verlustbehafteten Koppelkern (MK) geführt werden.

5. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) nach einem der vorangehenden Ansprüche, wobei die Impedanz ($\underline{Z}$) einen ohmschen Widerstand ($R_a$) umfasst.

6. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) nach Anspruch 5, wobei jeder Wicklungsstrang des Motors (M) einen LC-Kettenleiter (K) bildet und der ohmsche Widerstand ($R_a$) nach

$$R_a \geq \frac{1}{2} \cdot \frac{1}{3} \cdot \sqrt{\frac{L}{C}}$$

bemessen wird, wobei L die Induktivität und C die Ableitkapazität eines Kettenleiterglieds der LC-Kettenleiterstruktur (K) darstellen.

7. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) nach Anspruch 5 oder 6, wobei die Gesamt-Induktivität ($L_{H1}$) des mit dem Magnetkern (MK) gebildeten Koppelkreises nach

$$L_{H1} \geq \frac{R}{2\pi f_0}$$

bemessen wird, wobei vorzugsweise $f_0 \leq \frac{1}{2} \cdot f_{res}$ mit $f_{res}$ als ausgeprägter Resonanzfrequenz ist.

8. Verfahren zur Bedämpfung von Resonanzüberhöhungen an einem Motorsternpunkt (S) bei einem an einem Spannungszwischenkreis-Umrichter (UR) mit eingangsseitiger Induktivität, insbesondere einer Netzeingangsdrossel ($L_K$), betriebenen elektrischen Motor (M) mit mehreren Motorsternpunkten (S), insbesondere einem Linearmotor oder einem Torquemotor, wobei das Verfahren nach einem der vorangehenden Ansprüche für jeden Motorsternpunkt (S) durchgeführt wird, indem jeweils eine geeignete Impedanz ($\underline{Z}$) in alle zu einem Motorsternpunkt (S) führenden Motorphasen (U, V, W) eingekoppelt wird.

**9.** Verfahren zur Bedämpfung von Resonanzüberhöhungen an einem Motorsternpunkt (S) bei einem an einem Spannungszwischenkreis-Umrichter (UR) mit einer Netzeingangsdrossel ($L_K$) betriebenen elektrischen Motor nach einem der vorangehenden Ansprüche, wobei der Umrichter (UR) mit der Netzeingangsdrossel ($L_K$) zur Einspeisung (E) nach dem Hochsetzstellerprinzip betrieben wird.

**10.** Elektrischer Motor zum Betrieb an einem Spannungszwischenkreis-Umrichter (UR) mit eingangsseitiger Induktivität, insbesondere einer Netzeingangsdrossel ($L_K$), mit einem durch Wicklungsinduktivitäten (L) und Ableitkapazitäten (C) bedingten Frequenzgang mit ausgeprägter Resonanz ($f_{res}$) gegen Erdpotential, bei dem alle zu einem Motorsternpunkt (S) führenden Motorphasen (U, V, W) durch einen verlustbehafteten magnetisierbaren Koppelkern (MK) geführt sind.

**11.** Elektrischer Motor nach Anspruch 10, wobei der Koppelkern (MK) eine Wicklung aufweist, die über eine Impedanz ($\underline{Z}$) kurzgeschlossen ist.

**12.** Elektrischer Motor nach Anspruch 10 oder 11, wobei der Koppelkern (MK) am Eingang des Motors (M) angeordnet ist.

**13.** Elektrischer Motor nach Anspruch 11 oder 12, wobei die Impedanz ($\underline{Z}$) so ausgeprägt ist, dass diese durch an den Motorphasen (U, V, W) asymmetrisch gegen Erde anregende Systemschwingungen ($f_{sys}$) des Umrichtersystems ($L_K$, UR, L, M) in den Wicklungssträngen hervorgerufene kapazitive Ableitströme gegen Erdpotential bedämpft.

**14.** Elektrischer Motor nach einem der Ansprüche 11 bis 13, wobei die Impedanz ($\underline{z}$) einen ohmschen Widerstand ($R_a$) umfasst.

**15.** Elektrischer Motor nach Anspruch 14, wobei jeder Wicklungsstrang des Motors (M) einen LC-Kettenleiter (K) bildet und der ohmsche Widerstand ($R_a$) nach

$$R_a \geq \frac{1}{2} \cdot \frac{1}{3} \cdot \sqrt{\frac{L}{C}}$$

bemessen ist, wobei L die Induktivität und C die Ableitkapazität eines Kettenleitergliels der LC-Kettenleiterstruktur (K) darstellen.

**16.** Elektrischer Motor nach Anspruch 14 oder 15, wobei die Gesamt-Induktivität ($L_{H1}$) des mit dem Magnetkern (MK) gebildeten Koppelkreises nach

$$L_{H1} \geq \frac{R}{2\pi f_0}$$

bemessen ist, wobei vorzugsweise $f_0 \leq \frac{1}{2} \cdot f_{res}$ mit $f_{res}$ als ausgeprägter Resonanzfrequenz ist.

**17.** Elektrischer Motor einem der Ansprüche 10 bis 16, wobei der Koppelkern (MK) derart bemessen ist, dass dieser in keinem Betriebspunkt des Motors (M) in Sättigung geht.

**18.** Elektrischer Motor nach einem der Ansprüche 10 bis 17 mit Wicklungssträngen in Polspultechnik, die jeweils eine Kettenleiterstruktur (K) aus Induktivitäten (L) und Ableitkapazitäten (C) bilden, wobei die Impedanz ($\underline{Z}$) zur transformatorischen Bedämpfung dieser Kettenleiterstrukturen (K) dient.

**19.** Elektrischer Motor einem der Ansprüche 14 bis 18, wobei die Impedanz ($\underline{Z}$) so ausgeprägt ist, dass diese an den Motorphasen (U, V, W) asymmetrisch gegen Erde anregende Gleichtaktströme des Umrichtersystems ($L_K$, UR, L, M) in der Kettenleiterstruktur (K) bedämpft.

**20.** Elektrischer Antrieb nach einem der Ansprüche 10 bis 17 in sogenannter wilder Wicklungstechnik, insbesondere Niederspannungsmotor, der aufgrund seines geometrischen und/oder elektrischen Aufbaus niedrige Resonanzfrequenzen aufweist.

# FIG 1

# FIG 2

# FIG 3

## FIG 4

$$U_N \quad H_1(s) \quad U_{P600} \quad H_2(s) \quad U_S$$

## FIG 5

$$f_{res(sys)} \cong f_{sys} \qquad f_{res} \cong f_{res(mot)}$$

## FIG 6

# FIG 7

# FIG 10

## FIG 8

## FIG 9

## FIG 11

L1&&L2

300 V

0

-300 V

t

① ② ③ ④ ①

## FIG 12

L1&&L2
GW

300 V

0

-300 V

t

① ② ③ ④ ①

## FIG 13

OW

150 V

0

-150 V

t

## FIG 14

## FIG 15

## FIG 16

# FIG 17

# FIG 18

# FIG 19

PS1 ≙ V1        PS2 ≙ V2        PS3 ≙ V3

## FIG 20

## FIG 21

## FIG 22

Europäisches Patentamt

# EUROPÄISCHER RECHERCHENBERICHT

Nummer der Anmeldung

EP 01 12 7330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | OGASAWARA S., AKAGI H.: "MODELING AND DAMPING OF HIGH-FREQUENCY LEAKAGE CURRENT IN PWM INVERTER-FED AC MOTOR DRIVE SYSTEMS" IEEE TRANSACTIONS ON INDUSTRY APPLICATIONS, IEEE INC., Bd. 32, Nr. 5, 1. September 1996 (1996-09-01), Seiten 1105-1113, XP000632888 New York, US * CHAPTER I "Introduction"; CHAPTER II "High-Frequency Leakage Currents"; CHAPTER IV "Effect of Common-Mode Transformer" * --- | 1-5,8, 10-14, 17-19 | H02M1/12 |
| A | US 5 990 654 A (SKIBINSKI ET AL.) 23. November 1999 (1999-11-23) * Zusammenfassung * * Spalte 1, Zeile 11 - Spalte 3, Zeile 27 * * Spalte 6, Zeile 20-36 * * Spalte 9, Zeile 36 - Spalte 10, Zeile 16 * --- | 1,2,4, 10-13,19 | |
| A | US 5 646 498 A (LIPO ET AL.) 8. Juli 1997 (1997-07-08) * Zusammenfassung * * Spalte 3, Zeile 15 - Spalte 4, Zeile 44; Abbildungen 1-8 * --- | 1-5, 10-14 | RECHERCHIERTE SACHGEBIETE (Int.Cl.7) H02M H02H |
| A | PATENT ABSTRACTS OF JAPAN vol. 1997, no. 12, 25. Dezember 1997 (1997-12-25) -& JP 09 205799 A (SHIYUUWA SANGYO KK), 5. August 1997 (1997-08-05) * Zusammenfassung; Abbildungen 1,3 * --- | 1,10 | |

-/--

Der vorliegende Recherchenbericht wurde für alle Patentansprüche erstellt

| Recherchenort | Abschlußdatum der Recherche | Prüfer |
|---|---|---|
| BERLIN | 19. März 2002 | Beitner, M |

**Europäisches Patentamt**

## EUROPÄISCHER RECHERCHENBERICHT

Nummer der Anmeldung

EP 01 12 7330

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 686 806 A (HIBBARD) 11. November 1997 (1997-11-11) * Zusammenfassung * * Spalte 4, Zeile 37 - Spalte 6, Zeile 10; Abbildungen 2-9 * | 1,10 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| BERLIN | 19. März 2002 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

23

**ANHANG ZUM EUROPÄISCHEN RECHERCHENBERICHT**
**ÜBER DIE EUROPÄISCHE PATENTANMELDUNG NR.**                    EP 01 12 7330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2002

| Im Recherchenbericht angeführtes Patentdokument | Datum der Veröffentlichung | Mitglied(er) der Patentfamilie | Datum der Veröffentlichung |
|---|---|---|---|
| US 5990654      A | 23-11-1999 | KEINE | |
| US 5646498      A | 08-07-1997 | EP    0758161 A2 | 12-02-1997 |
| JP 09205799     A | 05-08-1997 | KEINE | |
| US 5686806      A | 11-11-1997 | KEINE | |

EPO FORM P0461

Für nähere Einzelheiten zu diesem Anhang : siehe Amtsblatt des Europäischen Patentamts, Nr.12/82